# EUROPEAN PATENT SPECIFICATION

(11) **EP 1 372 250 B1**
(45) Date of publication and mention of the grant of the patent: **22.11.2006**
(21) Application number: 03012777.3
(22) Date of filing: 05.06.2003
(51) Int. Cl.: H02K 29/03, H02K 1/14, H02K 3/52, H02K 5/167, H02K 11/04, H02K 29/08

(54) **Electronically switched electric motor structure**
Elektronisch kommutierter Motor
Moteur électrique à commutation électronique

(30) Priority: 11.06.2002 IT MI20020308
(43) Date of publication of application: 17.12.2003
(73) Proprietor: ELCO S.p.A., I-20065 Inzago (MI) (IT)
(72) Inventor: Colombo, Enzo, 24049 Verdello (Bergamo) (IT)
(74) Representative: Petruzziello, Aldo

(56) References cited:
- EP-A- 1 087 497
- EP-A- 1 211 787
- WO-A-00/07279
- PATENT ABSTRACTS OF JAPAN vol. 1997, no. 06, 30 June 1997 (1997-06-30) -& JP 09 037508 A (TOKYO PARTS IND CO LTD), 7 February 1997 (1997-02-07)
- PATENT ABSTRACTS OF JAPAN vol. 2000, no. 20, 10 July 2001 (2001-07-10) -& JP 2001 061240 A (DAIDO STEEL CO LTD), 6 March 2001 (2001-03-06)

## Description

The present invention refers in general to an electronically switched electric motor structure, particularly suitable to be employed for rotation of small-sized fans and the like.

Such an electronically switched electric motor has been described in the European patent EP 1 211 787 in the name of the same applicant. In such a motor according to the prior art, the stator unit is sandwiched between two insulating supports and an electronic circuit board supported by the insulating support disposed on the rear part of the stator is provided. Said electronic circuit board has a plurality of electronic components which serve to control the various operating functions of the motor.

The drive shaft integral with the rotor and with the armature subassembly is supported rotatably by two bushings disposed in respective seats formed in the two half shells of the motor casing. As a result the electronic circuit board has a central through hole to allow the passage of the drive shaft.

Said arrangement presents some drawbacks. In fact, the electronic components of the electronic board are subject to electromagnetic disturbances due to the electrostatic charges which are closed through the drive shaft that passes through the board.

Furthermore, the fact that the stator unit is insulated by two insulating supports, both open to allow the passage of the rotor and of the drive shaft, leads to difficulties in winding of the windings around the stator poles especially when high-speed winding machines are used. Furthermore, in the case of the stator being made up of two separate subassemblies, there are further difficulties in connection and assembly of the stator subassemblies.

Furthermore, because of the excessive length of the drive shaft, assembly of the whole motor structure also proves complex. In fact at the time of closure of the two half shells of the casing, the drive shaft must be perfectly centred on the two bushings of the half shells of the casing.

Document JP 9037508 discloses a bearing device of a small-size electrical motor having a rear insulation support comprising a closed rear flange; a seat, supporting a bearing which in turn rotatably supports one end of the motor shaft, is present on the front surface of said rear flange.

Document EP 1 087 497 discloses a stator plate for the stator for an electrical motor having an inner opening for a rotor and inwardly protruding pole teeth for stator winding.

One object of the present invention is to overcome the drawbacks of the prior art by providing an electronically switched electric motor structure which is extremely reliable and able to reduce to a minimum the interferences of electrostatic charges on the electronic components of the motor.

Another object of the present invention is to provide such an electronically switched electric motor structure that is cheap and simple to make and to assemble.

The most important object, however, is to increase the efficiency of the motor by improving the start-up conditions thereof.

These objects are achieved according to the invention with the characteristics listed in appended independent claim 1.

Advantageous embodiments of the invention are apparent from the dependent claims.

The electronically switched electric motor structure according to the invention comprises a casing, consisting of a front half shell and a rear half shell, able to contain the various elements of the motor. A stator unit, provided with stator windings, is mounted integral with the casing. A rotor is disposed in the air gap inside the stator unit and is integral with a drive shaft having one end protruding out of the casing, for application of a load. The motor further comprises control electronics, mounted on a circuit board, supported by an insulating rear support, mounted in the rear part of the stator unit.

The peculiar characteristics of the invention are represented by the fact that:
- The rear insulating support comprises a closed rear flange made of insulating material, said rear flange having, in its front surface facing towards the rotor, a seat to receive a bearing or a bushing able to rotatably support the rear end of the drive shaft. Tanks to the presence of the rear flange, the control electronics of the motor, mounted on the circuit board, remains insulated and immune from the disturbances coming from the electrostatic charges generated by the rotation of the drive shaft.
- The stator unit is a two-parts one comprising a yoke and a pole piece, both consisting of a plurality of toroidal laminations stacked one on top of the other.
- Each lamination of the pole piece comprises a plurality of poles protruding radially from respective pole shoes disposed along a circular path so as to define a through hole able to receive the rotor.
- The free end of the poles are engageable in special grooves formed in the inside edge of the stator yoke.
- The pole shoes have substantially arched end edges wherein recessed sectors having an inside diameter slightly greater than the inside diameter of the edges of the pole shoes are formed.

The arched end edges of the pole shoes have recessed sectors, the efficiency of the motor is increased by improving the start-up conditions thereof. In particular, the recessed sectors generate a reluctance variation inside the above mentioned air gap.

Furthermore the fact of providing for the rear end of the drive shaft to be supported rotatably by the bushing mounted in the rear flange of the insulating support, makes it possible to have various other advantages compared with the prior art. In fact shorter drive shafts can be made, it is not necessary to make through holes for the drive shaft in the circuit board, nor is it necessary to provide bushings or bearings in the rear half shell of the casing. As a result assembly of the motor is considerably simplified with a consequent saving in time and production costs.

Further characteristics of the invention will be made clearer by the detailed description that follows, referring to a purely exemplary and therefore non-limiting embodiment thereof, illustrated in the appended drawings, in which:
Figure 1 is an exploded axonometric view illustrating the electronically switched electric motor according to the invention;
Figure 2 is an axonometric exploded view illustrating the rotor and the two stator subassemblies of the electric motor according to the invention;
Figure 2a is a plan view of the embodiment of a lamination of the pole piece of the stator, containing essential characteristics for solving the objective problem underlying the invention ;
Figures 3 and 4 are two perspective views illustrating from the front and from the rear, respectively, a rigid rear insulating support of the stator;
Figure 5 is an axial sectional view of the rigid rear support of the stator, taken along the sectional plane V-V of Figure 3;
Figure 6 is an axonometric view illustrating a front rigid insulating support of the stator;
Figure 7 is an axonometric view taken from the rear, illustrating the pole piece subassembly of the stator assembled between the rigid rear support and the rigid front support with the respective stator windings;
Figure 8 is a view from the rear of the pole piece subassembly of the stator of Figure 7;
Figure 9 is an axial sectional view taken along the sectional plane IX-IX of Figure 8;
Figure 10 is an axonometric view, taken from the rear, illustrating the entire stator unit assembled and supporting a circuit board;
Figure 11 is a view from the rear of the stator unit of Figure 10;
Figure 12 is an axial sectional view along the plane of section XII-XII of Figure 11.

The electronically switched electric motor according to invention is described with the aid of the figures.

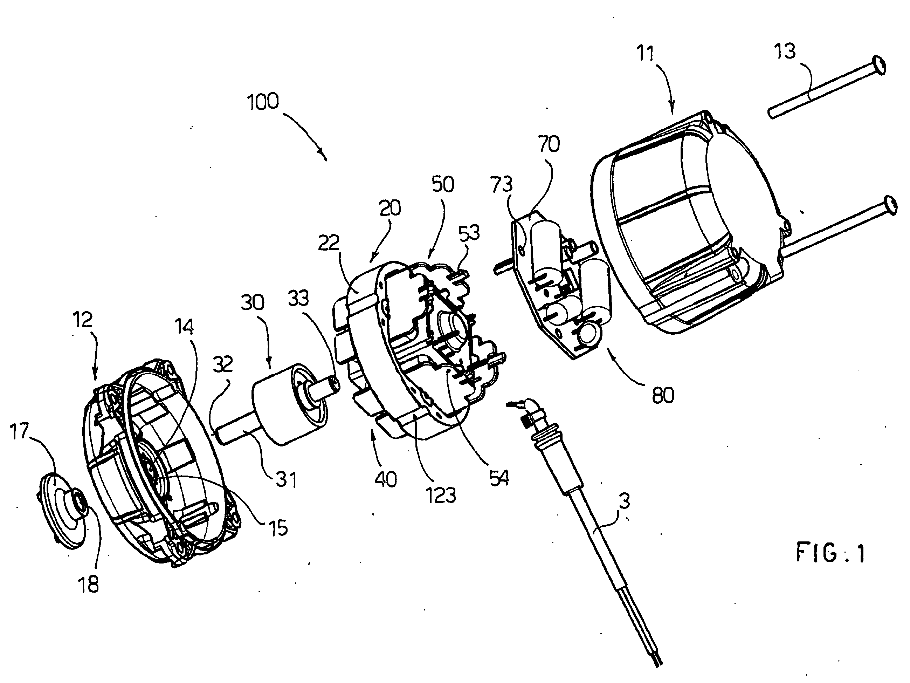

In Figure 1 the electric motor according to the invention, denoted as a whole with reference numeral 100, is shown exploded. The motor 100 comprises a stator unit 20 with the respective stator windings, a rotor 30 integral with a drive shaft 31, control electronics 80 for operation of the motor, a power cable 3 to supply the motor and a casing consisting of a front half shell 12 and a rear half shell 11 able to contain the various members of the motor.

The rear half shell 11 of the casing is greater in size longitudinally than the front half shell 12. The two half shells 11 and 12 are assembled, by means of fixing rods 13, so as to generate therein a cylindrical space to contain the motor members. The front half shell 12 has an axial hole 14 through which the drive shaft 31 exits.

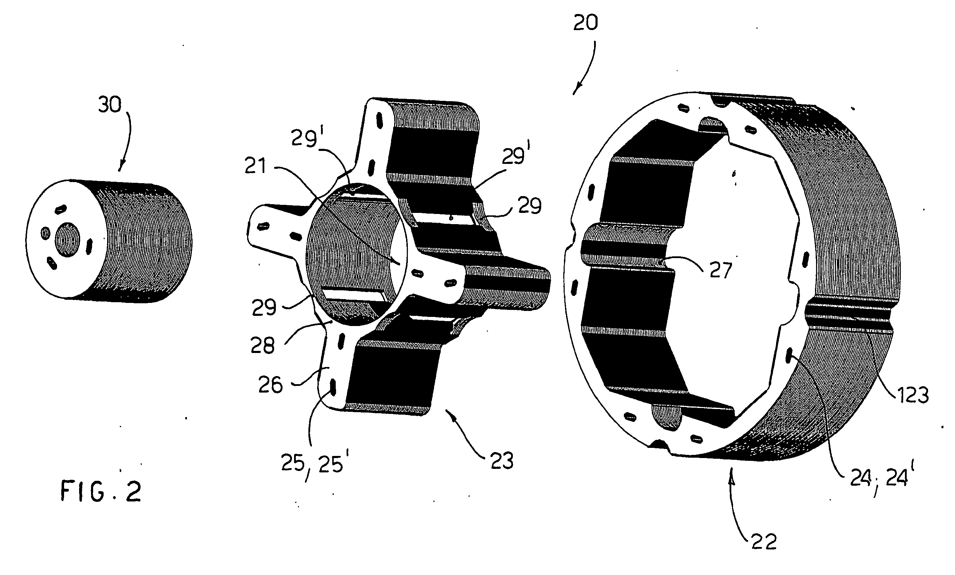

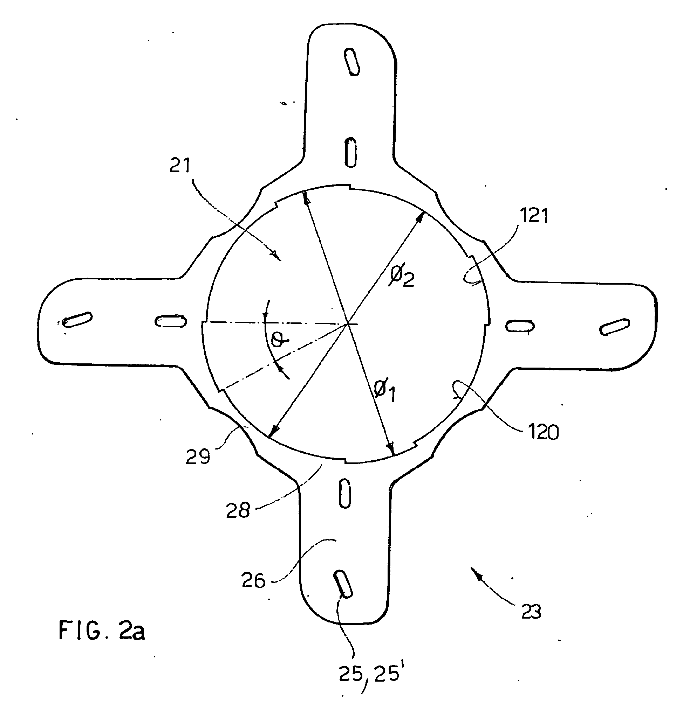

As shown in Figure 2, the main members of the motor comprise a rotor 30 and a stator 20 consisting of two subassemblies 22 and 23. The first stator subassembly comprises a stator yoke 22 and a second stator subassembly comprises a pole shoe 23.

The stator yoke 22 comprises a plurality of laminations, in the form of toroidal plates, stacked one on top of the other, and held together by means of recessed parts 24 provided on one face and opposed to protruding parts 24' provided on the opposite face, level with the recessed parts 24. The stator yoke 22 has, on the cylindrical outer surface thereof, external grooves 123 intended to engage one half inside the front half shell 12 of the casing and the other half inside the rear half shell 11. In this manner the stator 20 is disposed axially inside the casing 10 and is integral therewith.

In the inside edge of the laminations of the stator yoke 22 there are formed a plurality of rounded cusp-shaped recesses 27 which, when put in register with each other, form longitudinal seats inside the stator yoke 22.

The pole shoe 23 comprises a group of laminations, stacked one on top of the other and held together by means of recessed parts 25 provided on one face and opposed to protruding parts 25' provided on the opposite face level with the recessed parts 25.

Each lamination comprises a plurality of poles 26 which protrude radially outward from respective pole shoes 28 shaped as the arc of a circle so as to define an axial hole 21 which forms the air gap destined to receive the rotor 30. The end of each pole 26 has a shape complementary to the recess 27 of the laminations of the stator yoke, so that the pole piece 23 can engage inside the stator yoke 22.

The laminations which form the pole piece 23 are held together by bridges 29 which connect the ends of the pole shoes 28 at least of the first front laminations and of the last rear laminations. Instead, in the intermediate laminations separation holes 29' which separate the ends of the pole pieces 28 are provided.

In Figure 2a the embodiment of the laminations of the pole shoe 23 - containing essential characteristics for solving the objective problem underlying the invention - is illustrated, wherein the hole 21 of the air gap is defined by a suitably shaped profile. As seen previously, the pole shoes 28 have arched end edges 120, possibly connected to the bridges 29, so as to form the circular hole 21 that defines the air gap.

In the embodiment **shown by Figure 2a,** there are formed in the arched end edges 120 of the pole pieces 28, respectively, four circular sectors 121 (one for each pole shoe) recessed radially outward with respect to the edges 120 of the pole shoes. The inside diameter φ1 of the sectors 121 thus proves slightly larger than the inside diameter φ2 of the edges 120 of the pole shoes.

The recessed sectors 121 are disposed in diametrically opposite positions and each recessed sector 121 is defined by an arc of a circle subtended by an angle at the centre θ of about 30°.

This arrangement allows greater efficiency of the motor, improving the start-up conditions thereof. In particular, the recessed sectors 121 generate a reluctance variation inside the air gap 21.

Therefore, once the current to the motor has been interrupted, the rotor 20 will stop inside the air gap 21 in the position of least reluctance. Thanks to the particular design of the structure of the laminations of the pole piece 23, that is to the provision of the recessed sectors 121 in the pole shoes 28, the position of least reluctance, wherein the rotor 30 will stop, coincides with the most favourable position for start-up of the motor. In this manner the conditions of uncertainty about the position of the rotor at the time of start-up are overcome.

The rotor 30 is substantially cylindrical in shape, with an outside diameter smaller than the inside diameter of the axial hole 21 in the stator 20 (that is to say smaller than the smallest inside diameter φ2 of the edges 120 of the pole shoes), so as to be able to be positioned therein. The rotor 30 is a permanent-magnet rotor, per se known and therefore not explained in further detail.

Returning to Figure 1, the drive shaft 31 is integral with the rotor 30 and disposed axially therein so as to define a front end 32 which protrudes forward from the rotor 30 and a shorter rear end 33 which protrudes rearward from the rotor 30.

The front part of the rotor shaft 31 engages in bearings or bushings 15 fixed with a spring inside the front half shell 12 of the casing, so that the front end 32 of the drive shaft can protrude forward and axially out of the axial hole 14 of the half shell 12, so that a load can be applied thereto. Outside the front half shell 12 of the casing there is applied a flange 17 which has an axial hole 18 able to receive the front end 32 of the drive shaft 31. A load, such as for example a fan (not shown), is applied to the flange 17.

The stator 20 is sandwiched between a first rigid front insulating support 40 and a second rigid rear insulating support 50.

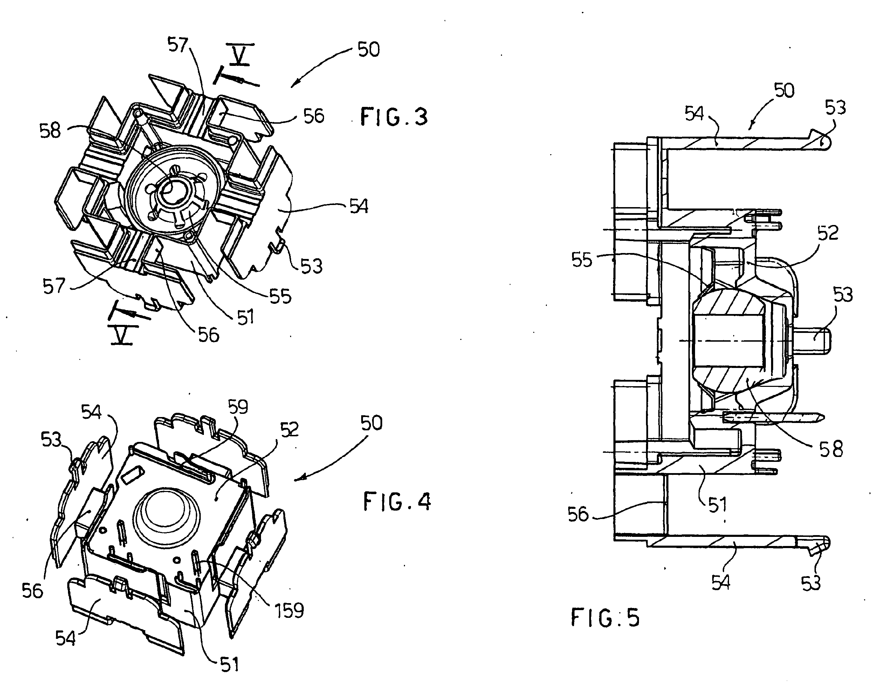

As shown better in Figures 3, 4 and 5, the second rigid rear support 50 comprises a central box-type body 51 closed at the rear by a rear flange 52.

In the outward facing surface of the rear flange 52 there are formed guides 59 and pins 159 to guide, return and block the wires of the stator windings.

In the inward facing surface of the rear flange 52 there is formed a circular seat able to receive a bearing or bushing 58 able to rotatably support the rear end 33 of the drive shaft 31. The bushing 58 is retained in its seat by a crown spring 55.

From the side walls of the box-type body 51 there protrude outward four jumpers or bridges 56 ending in respective bulkheads 54 parallel to the respective side of the box-type body 51. Each jumper 56 defines a recessed seat 57 open at the front and closed at the rear. Each bulkhead 54 has on its rear edge, in a central position, a hook or tongue 53 protruding rearward therefrom.

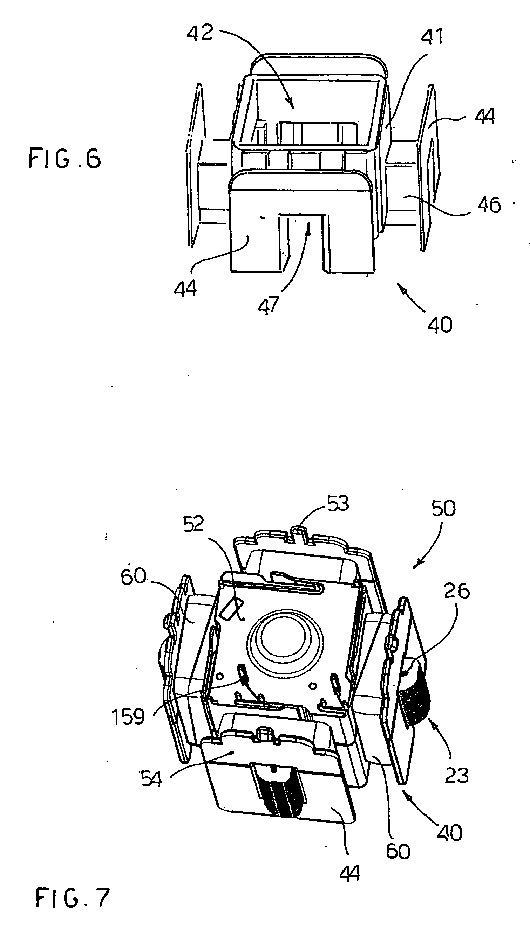

As shown in Figure 6, the rigid front insulating support 40 is substantially similar to the rigid rear insulating support 50, except for the fact that the front support 40 has a box-type body 41 open at the front and at the rear so as to define a through hole 42 for insertion of the rotor 30.

From the walls of the box-type body 41 there protrude respective bridges or jumpers 46 ending in bulkheads 44 parallel to the side walls. Each jumper 46 has at the rear a recessed seat 47 in register with a slot in the respective bulkhead 44.

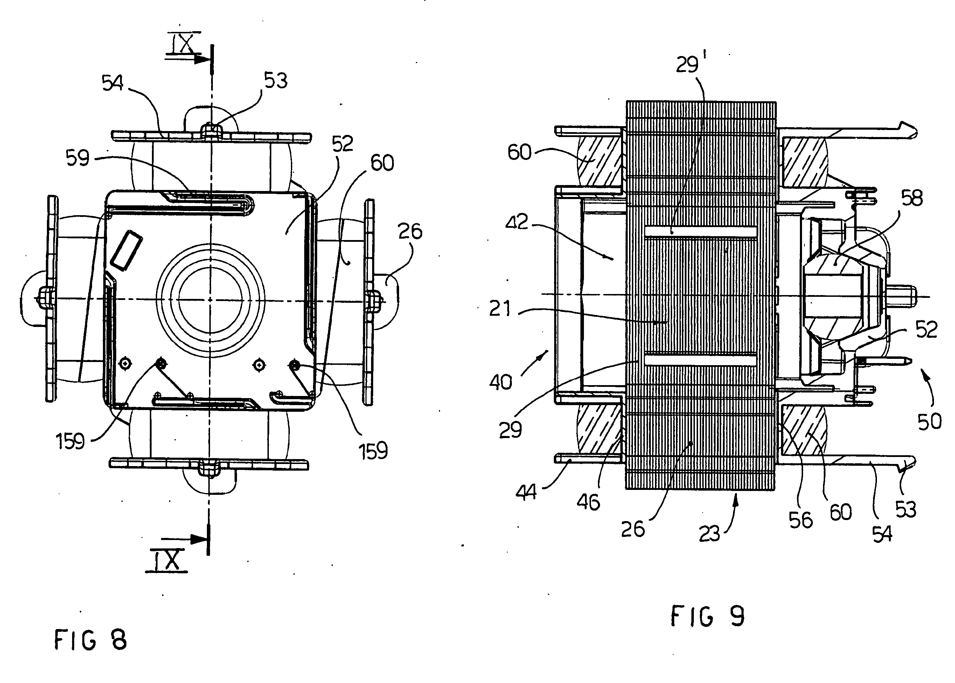

As shown better in Figures 7-9, the pole piece 23 is sandwiched between the rigid front support 40 and the rigid rear support 50, so that the poles 26 are received in the seats 57, 47 of the jumpers 56, 46 respectively of the rigid rear 50 and front 40 support and the pole shoes 28 are received in box-type bodies 51, 41 respectively of the rigid rear 50 and front support 40 to receive the poles of the pole piece.

At this point, by means of an automatic rewinding machine, a conductor wire is wound on the jumpers 56 and 46 so as to form the stator windings 60. In fact, in this manner, the windings 60 are disposed around the stator poles 26. The ends of the conductor wire of the windings 60 are guided in the guides 59 and blocked in the pins 159 of the rear closure flange 52.

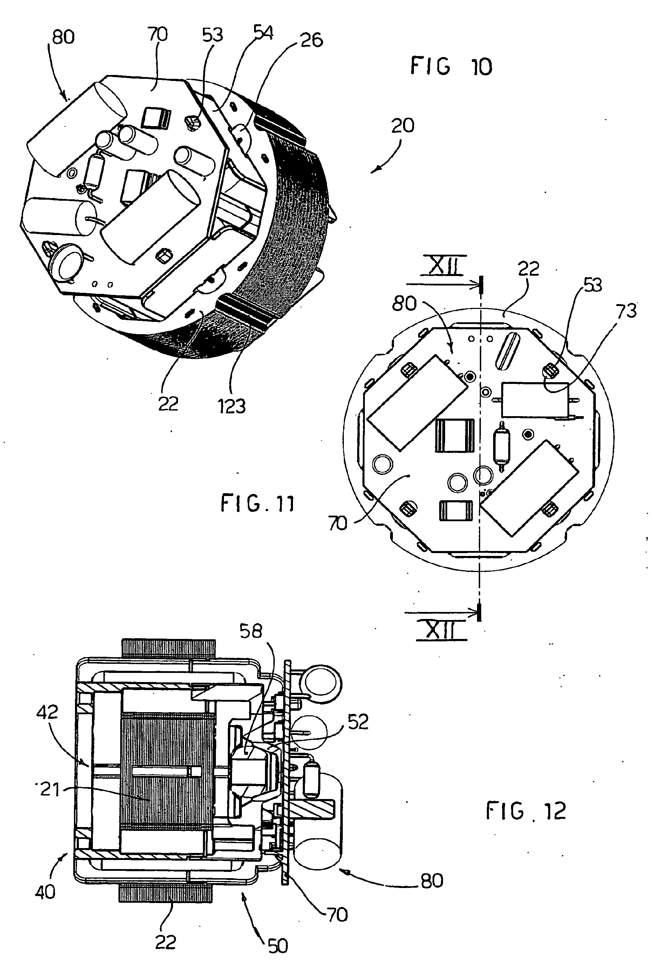

As shown better in Figures 10-12, the assembly consisting of the pole piece 23 packed between the two rigid insulating supports 40, 50 and the stator windings 60, is inserted in the stator yoke 22, so that the free ends of the poles 26 engage in the recessed seats 27 of the stator yoke 22. At this point assembly of the stator unit has been completed.

As is known, an electric motor with a permanent-magnet rotor must have a start-up system to allow rotation of the rotor to be started. Such a start-up system can generally be provided by an electronic control, such as, for example, the electronic control described in the European patent EP 1211 787 in the name of the same applicant.

The electronics of the electronic control of the motor, denoted as a whole by reference numeral 80, is disposed on a board 70 intended to be fixed on the rear face of the rear rigid insulating support 50. For this purpose the circuit board 70 has four holes 73 able to receive, in a snap coupling relationship, the four hooks 53 of the rear rigid support 50. When the circuit board 70 is mounted, it abuts on the rear edges of the rectangular bulkheads 54 of the rear rigid insulating support and remains at a distance from the stator windings 60, so as to isolate the electronics 80 from the windings 60 of the stator 20.

Furthermore it should be noted that the rear flange 52 of the rear rigid insulating support provides a shield against the electrostatic charges coming from the bushing 58 intended to support the rear end 33 of the drive shaft. In this manner the electronics 80 is perfectly insulated from the disturbances of the electrostatic charges caused by rotation of the drive shaft 31.

The electronics 80 advantageously comprises a Hall-effect magnetic sensor which detects the magnetic field produced by the permanent magnets positioned on the rotor 30, to detect the exact position of the rotor 30. Said magnetic sensor can be positioned inside the stator pack and facing the rotor 30, thus connected by means of an electric cable to the board 70 wherein the electronics 80 is provided.

In this manner, during rotation of the rotor 30 the alternation of the positive and negative pole in the magnetic field generated by the permanent magnets produces a train of pulses leaving the magnetic sensor with the same frequency as the frequency of rotation of the rotor.

Once the circuit board 70 has been mounted on the rear support 50 of the stator unit, the entire unit is disposed in the rear half shell 11 so that the external grooves 123 of the stator yoke engage in respective interior ribs of the rear half shell 11. Then the rotor 30 is inserted at the front in inside the hole 21 in the stator 20, so that the rear end 33 of the drive shaft 31 engages in the bushing 58 of the rear support 50. The front half shell 12 is then closed on the rear half shell 11, so that the front part of the drive shaft 31 engages in the bushing 15 of the front half shell 12. Finally the flange 17 is applied in the front end 32 of the drive shaft which protrudes outward from the front half shell 12.

The motor 100 also comprises an electric connector connected to a supply cable 3 with a plug (not shown) for connection to the mains supply to bring the power to the various electronic components of the motor 100.

In the present description of the invention a stator with salient poles provided with four poles disposed in diametrically opposite positions has been shown. Clearly the invention also relates to stators with salient poles comprising a number of poles other than four. In this case, accordingly, the rigid insulating supports 40, 50 will comprise a number of jumpers 46, 56 other than four and disposed in register with the poles of the stator.

Numerous variations and modifications of detail within the reach of a person skilled in the art can be made to the present embodiment of the invention, and in any case come within the scope of the invention as set forth in the appended claims.

## Claims

1. An electronically switched electric motor structure (100) comprising:
- a casing consisting of a front half shell (12) and a rear half shell (11) able to contain the various members of the motor,
- a stator unit (20) provided with stator windings (60) and mounted integral to said casing,
- a rotor (30) disposed inside said stator unit (20) and integral with a drive shaft (31), and
- control electronics (80) mounted on a circuit board (70) supported by an insulating rear support (50) mounted in the rear part of said stator unit (20),
**characterised in that**:
- said rear insulating support (50) comprises a closed rear flange (52) made of insulating material, said rear flange (52) having, in the front surface thereof facing towards the rotor (30), a seat to receive a bearing or a bushing (58) able to support rotatably a rear end (33) of said drive shaft (31), so that the electronics (80) of the motor is insulated from the electrostatic charges generated by the rotation of the drive shaft (31);
- said stator (20) comprises a stator yoke (22) consisting of a plurality of toroidal laminations stacked one on top of the other, and a pole piece (23) consisting of a plurality of stacked laminations comprising a plurality of poles (26) protruding radially from respective pole shoes (28) disposed along a circular path so as to define a through hole (21) able to receive the rotor (30), the free end of said poles (26) being engageable in special grooves (27) formed in the inside edge of said stator yoke (22);
- said pole shoes (28) have substantially arched end edges (120) wherein there are formed recessed sectors (121) having an inside diameter (φ1) slightly greater than the inside diameter (φ2) of said edges (120) of the pole shoes.

2. An electric motor structure (100) according to claim 1, **characterised in that** said rear insulating support (50) comprises:
- a central containing body (51), covered at the rear by said rear flange (52) and able to receive the pole shoes (28) of the pole piece (23) of the stator (20), and
- a plurality of jumpers (56) which protrude transversally outwards from the side walls of said central containing body (51), able to receive the poles (26) of the pole piece (23) of the stator (20).

3. An electric motor structure (100) according to claim 2, **characterised in that** said central containing body (51) has a substantially parallelepiped box shape and said jumpers (56) are four in number, each protruding from a side wall of said box-type containing body (51).

4. An electric motor structure (100) according to claim 2 or 3, **characterised in that** at the end of each jumper (56) there is provided a bulkhead (54) comprising engagement means able to engage with complementary engagement means (73) provided on said circuit board (70), so that the circuit board (70) abuts on the edge of said bulkheads (54) remaining at a distance from the stator windings (60).

5. An electric motor structure (100) according to claim 4, **characterised in that** said engagement means (73) of the rear insulating support (50) comprise hooks or tongues (53) able to engage, in a snap coupling relationship, in holes (73) provided on said circuit board (70).

6. An electric motor structure (100) according to any one of the preceding claims, **characterised in that** said bushing (58) is blocked in the seat of the flange (52) of the rear insulating support (50) by means of a crown spring (55).

7. An electric motor structure (100) according to any one of the preceding claims, **characterised in that** it comprises a front insulating support (40) disposed in the front part of said stator unit (20) so as to compress said stator unit (20) between said front insulating support (40) and said rear insulating support (50).

8. An electric motor structure (100) according to claim 7, **characterised in that** said front insulating support (40) comprises:
- a central containing body (41), open at the front and at the rear and able to receive the pole shoes (28) of the pole piece (23) of the stator (20), and
- a plurality of jumpers (46), which protrude transversally outward from the side walls of said central containing body (41), able to receive the poles (26) of the pole piece (23) of the stator (20).

9. An electric motor structure (100) according to claim 8, **characterised in that** said windings (60) of the stator unit (20) are wound round said jumpers (56, 46) of said rear support (50) and of said front support (40).

10. An electric motor structure (100) according to claim 1, **characterised in that** at least some of said pole shoes (28) are connected to each other by means of connecting bridges (29) and some of said pole shoes (28) are separated from each other by means of separation slots (29').

11. An electric motor structure (100) according to claim 1, **characterised in that** the number of said recessed sectors (121) is equal to the number of poles (26) of the pole piece (23).

12. An electric motor structure (100) according to claim 1, **characterised in that** each recessed sector (121) is defined by an arc subtended by an angle at the centre (θ) of about 30°.

13. An electric motor structure (100) according to claim 1, **characterised in that** the outer ends of said poles (26) of the pole piece (23) protrude outward from said front and rear supports (40, 50) to be able to engage in said grooves (27) of the inside edge of the stator yoke (22).

14. An electric motor structure (100) according to any one of the preceding claims, **characterised in that** a front part of said drive shaft (31) is rotatably supported by a bearing or bushing (15) disposed in said front half shell (12).

15. An electric motor structure (100) according to any one of the preceding claims, **characterised in that** the front end (32) of said drive shaft (31) protrudes forward from said front half shell (12) to engage in a flange (17) able to support a load, such as a fan.

16. An electric motor structure (100) according to any one of the preceding claims, **characterised in that** said rotor (30) is a permanent-magnet rotor.

17. An electric motor structure (100) according to claim 16, **characterised in that** said control electronics (80) comprises a Hall-effect electromagnetic sensor able to detect the magnetic field generated by the permanent magnets of the rotor (30).

## Patentansprüche

1. Elektronisch kommutierte Elektromotorstruktur (100), umfassend:
- eine Ummantelung mit einer vorderen Halbschale (12) und einer hinteren Halbschale (11), welche verschiedene Bauteile des Motors beinhalten können,
- eine Ständereinheit (20), die mit Ständerwicklungen (60) versehen und fest in der Ummantelung eingebaut ist,
- einen Läufer (30), der in der Ständereinheit (20) angeordnet ist ein Ganzes mit der Antriebswelle (31) bildet,
- eine Steuerelektronik (80), die auf einer Leiterplatte (70) befestigt ist und von einer hinteren Isolierstütze (50), die im hinteren Teil der Ständereinheit (20) befestigt ist, getragen wird,
**dadurch gekennzeichnet, dass**:
- die hintere Isolierstütze (50) einen geschlossenen hinteren Flansch (52) aus Isoliermaterial aufweist, wobei der hintere Flansch (52) an der Vorderfläche, die dem Rotor zugewandt (30) ist, einen Sitz aufweist zur Aufnahme einer Lagerung oder einer Lagerbuchse (58), welche ein hinteres Ende (33) der Antriebswelle (31) drehbar trägt, so dass die Elektronik (80) des Motors von den elektrostatischen Entladungen, die durch die Drehung der Antriebswelle (31) erzeugt werden, isoliert ist;
- der Ständer (20) ein Ständerjoch (22) umfasst, das mehrere ringförmige Lamellierungen aufweist, die übereinander geschichtet sind, und ein Polstück (23), das sich aus mehreren geschichteten Laminierungen zusammensetzt, die mehrere Pole (26) umfassen, welche aus den einzelnen Polschuhen (28) hervortreten, die entlang einer kreisförmigen Bahn angeordnet sind, um eine Durchgangsbohrung (21) zu umgrenzen, welche den Ständer (30) aufnehmen kann, wobei das freie Ende der Pole (26) in Spezialnuten (27), die im Innenrad des Ständerjochs (22) ausgebildet sind, eingreifbar ist.
- die Polschuhe (28) im Wesentlichen bogenförmige Endränder (120) aufweisen, wobei vertiefte Abschnitte (121) gebildet werden, deren Innendurchmesser (φ1) geringfügig größer als der Innendurchmesser (φ2) der Ränder (120) der Polschuhe ist.

2. Elektromotorstruktur (100) nach Anspruch 1, **dadurch gekennzeichnet, dass** die hintere Isolierstütze (50) umfasst:
- ein in der Mitte gelegenes Einschließgehäuse (51), das an der Rückseite durch den hinteren Flansch (52) abgedeckt ist und die Polschuhe (28) des Polstücks (23) des Ständers (20) aufnehmen kann,
- mehrere Brücken (56), die schräg nach außen aus den Seitenwänden des in der Mitte gelegenen Einschließgehäuses (51) hervortreten und die Pole (26) des Polstücks (23) des Ständers (20) aufnehmen können.

3. Elektromotorstruktur (100) nach Anspruch 2, **dadurch gekennzeichnet, dass** das in der Mitte gelegene Einschließgehäuse (51) im Wesentlichen die Form eines Parallelepipedkastens aufweist, und die Brücken (56) vier an der Zahl sind, wobei jede aus einer Seitenwand des kastenförmigen Ein-schließgehäuses (51) hervortritt.

4. Elektromotorstruktur (100) nach Anspruch 2 oder 3, **dadurch gekennzeichnet, dass** am Ende jeder Brücke (56) eine Trennwand (54) vorgesehen ist, das Eingreifmittel umfasst, die sich in ergänzende Eingreifmittel (73), die auf der Leiterplatte (70) vorgesehen sind, eingreifen lassen, so dass die Leiterplatte (70) am Rand der Trennwände (54) mit einem verbleibenden Abstand von den Ständerwicklungen (60) anliegt.

5. Elektromotorstruktur (100) nach Anspruch 4, **dadurch gekennzeichnet, dass** die Eingreifmittel (73) der hinteren Isolierstütze (50) Haken oder Federn (53) umfassen, die in die Löcher (73) auf der Leiterplatte (70) anhand einer Schnappkupplungsverbindung eingreifen können.

6. Elektromotorstruktur (100) nach einem der vorhergehenden Ansprüche, **dadurch gekennzeichnet, dass** die Lagerbuchse (58) im Sitz des Flansches (52) auf der hinteren Isolierstütze (50) anhand einer Kranzfeder (55) blockiert ist.

7. Elektromotorstruktur (100) nach einem der vorhergehenden Ansprüche, **dadurch gekennzeichnet, dass** eine vordere Isolierstütze (40), die im vorderen Teil der Ständereinheit (20) derart angeordnet ist, dass die Ständereinheit (20) zwischen die vordere Isolierstütze (40) und die hinteren Isolierstütze (50) gepresst wird.

8. Elektromotorstruktur (100) nach Anspruch 7, **dadurch gekennzeichnet, dass** die vordere Isolierstütze (4) umfasst:
- ein in der Mitte gelegenes Einschließgehäuse (41), das an der Vorderseite und Rückseite geöffnet ist und die Polschuhe (28) des Polstücks (23) des Ständers (20) aufnehmen kann,
- mehrere Brücken (46), die schräg nach außen aus den Seitenwänden des in der Mitte gelegenen Einschließgehäuses (41) hervortreten und die Pole (26) des Polstücks (23) des Ständers (20) aufnehmen können.

9. Elektromotorstruktur (100) nach Anspruch 8, **dadurch gekennzeichnet, dass** die Wicklungen (60) der Ständereinheit (20) um die Brücken (56, 46) der hinteren Stütze (50) und vorderen Stütze (40) gewickelt sind.

10. Elektromotorstruktur (100) nach Anspruch 1, **dadurch gekennzeichnet, dass** mindestens die Polschuhe (28) anhand von Verbindungsbrücken (29) miteinander verbunden und einige Polschuhe (28) voneinander durch Trennschlitze (29') getrennt sind.

11. Elektromotorstruktur (100) nach Anspruch 1, **dadurch gekennzeichnet, dass** die Anzahl der vertieften Abschnitte (121) gleich der Anzahl der Pole (26) des Polstücks (23) sind.

12. Elektromotorstruktur (100) nach Anspruch 1, **dadurch gekennzeichnet, dass** jeder vertiefte Abschnitt (121) durch einen Bogen definiert wird, der durch einen Winkel in der Mitte (θ) von etwa 30° begrenzt ist.

13. Elektromotorstruktur (100) nach Anspruch 1, **dadurch gekennzeichnet, dass** die Außenenden der Pole (26) des Polstücks (23) nach außen aus den vorderen und hinteren Stützen (40, 50) heraustreten, um in die Nuten (27) des innen liegenden Rands des Ständerjochs (22) einzugreifen.

14. Elektromotorstruktur (100) nach einem der vorhergehenden Ansprüche,
**dadurch gekennzeichnet, dass**
der vordere Teil der Antriebswelle (31) drehbar durch eine in der vorderen Halbschale (12) angeordnete Lagerung oder Lagerbuchse (15) getragen wird.

15. Elektromotorstruktur (100) nach einem der vorhergehenden Ansprüche, **dadurch gekennzeichnet, dass** das vordere Ende (32) der Antriebswelle (31) nach vom aus der vorderen Halbschale (12) heraustritt, um in einen Flansch (17) einzugreifen, der in der Lage ist, eine Last, wie zum Beispiel einen Lüfter, zu tragen.

16. Elektromotorstruktur (100) nach einem der vorhergehenden Ansprüche, **dadurch gekennzeichnet, dass** der Läufer (30) ein Permanentmagnetläufer ist.

17. Elektromotorstruktur (100) nach einem der Ansprüche 16, **dadurch gekennzeichnet, dass** die Steuerelektronik (80) eine elektromagnetische Hallsonde umfasst, die das von den Dauermagneten des Läufers (30) erzeugte Magnetfeld erfassen kann.

## Revendications

1. Structure de moteur électrique à commutation électronique (100) comprenant :
- un carter se composant d'une demi coque avant (12) et d'une demi coque arrière (11) capable de contenir les divers membres du moteur,
- une unité de stator (20) munie de bobinages de stator (60) et montée de manière intégrale au dit carter,
- un rotor (30) disposé à l'intérieur de ladite unité de stator (20) et faisant partie intégrale de l'arbre d'entraînement (31), et
- des composants électroniques de commande (80) montés sur une carte de circuit (70) supportée par un support arrière isolant (50) monté dans la partie arrière de ladite unité de stator (20),
**caractérisée en ce que** :
- ledit support arrière isolant (50) comprend une bride arrière fermée (52) composée d'un matériau isolant, ladite bride arrière (52) ayant, dans la surface avant de celle-ci faisant face vers le rotor (30), un siège pour recevoir un palier ou un coussinet (58) capable de supporter de manière rotative une extrémité arrière (33) dudit arbre d'entraînement (31), de manière à ce que les composants électroniques (80) du moteur soient isolés des charges électrostatiques générées par la rotation de l'arbre d'entraînement (31) ;
- ledit stator (20) comprend un bâti de stator (22) se composant d'une pluralité de stratifications toroïdales empilées l'une sur l'autre, et une pièce de montant (23) se composant d'une pluralité de stratifications empilées comprenant une pluralité de montants (26) faisant saillie de manière radiale à partir de sabots de montants respectifs (28) disposés le long d'une voie circulaire pour définir un trou traversant (21) capable de recevoir le rotor (30), l'extrémité libre desdits montants (26) pouvant être mise en prise dans des gorges spéciales (27) formées dans le bord intérieur dudit bâti de stator (22) ;
- lesdits sabots de montants (28) ont des bords d'extrémité sensiblement arqués (120) dans lesquels il y a des secteurs renfoncés formés (121) ayant un diamètre intérieur (φ1) légèrement supérieur au diamètre intérieur (φ2) desdits bords (120) de sabots de montants.

2. Structure de moteur électrique (100) selon la revendication 1, **caractérisée en ce que** ledit support arrière isolant (50) comprend :
- un corps contenant central (51), recouvert à l'arrière par ladite bride arrière (52) et capable de recevoir les sabots de montants (28) de la pièce de montant (23) du stator (20), et
- une pluralité de cavaliers (56) qui font saillie transversalement vers l'extérieur des parois latérales dudit corps contenant central (51), capable de recevoir les montants (26) de la pièce de montant (23) du stator (20).

3. Structure de moteur électrique (100) selon la revendication 2, **caractérisée en ce que** ledit corps contenant central (51) a une forme de boîte sensiblement en parallélépipède et lesdits cavaliers (56) sont au nombre de quatre, chacun faisant saillie d'une paroi latérale dudit corps contenant (51) en forme de boîte.

4. Structure de moteur électrique (100) selon la revendication 2 ou 3, **caractérisée en ce que** à l'extrémité de chaque cavalier (56) il est fourni une cloison (54) comprenant des moyens de mise en prise capables de se mettre en prise avec des moyens de mise en prise complémentaires (73) fournis sur ladite carte de circuit (70), de manière à ce que la carte de circuit (70) s'aboute sur le bord desdites cloisons (54) restant à une distance des bobinages de stator (60).

5. Structure de moteur électrique (100) selon la revendication 4, **caractérisée en ce que** lesdits moyens de mise en prise (73) du support arrière isolant (50) comprennent des crochets ou des languettes (53) capables de se mettre en prise, dans une relation d'accouplement par pression, dans des trous (73) fournis sur ladite carte de circuit (70).

6. Structure de moteur électrique (100) selon l'une quelconque des revendications précédentes, **caractérisée en ce que** ledit coussinet (58) est bloqué dans le siège de la bride (52) du support arrière isolant (50) au moyen d'un ressort à couronne (55).

7. Structure de moteur électrique (100) selon l'une quelconque des revendications précédentes, **caractérisée en ce qu'**elle comprend un support avant isolant (40) disposé dans la partie avant de ladite unité de stator (20) de manière à compresser ladite unité de stator (20) entre ledit support avant isolant (40) et ledit support arrière isolant (50).

8. Structure de moteur électrique (100) selon la revendication 7, **caractérisée en ce que** ledit support avant isolant (40) comprend :
- un corps contenant central (41), ouvert à l'avant et à l'arrière et capable de recevoir les sabots de montants (28) de la pièce de montant (23) du stator (20), et
- une pluralité de cavaliers (46), qui font saillie de manière transversale vers l'extérieur des parois latérales dudit corps contenant central (41), capable de recevoir les montants (26) de la pièce de montant (23) du stator (20).

9. Structure de moteur électrique (100) selon la revendication 8, **caractérisée en ce que** lesdits bobinages (60) de l'unité de stator (20) sont enroulés autour desdits cavaliers (56, 46) dudit support arrière (50) et dudit support avant (40).

10. Structure de moteur électrique (100) selon la revendication 1, **caractérisée en ce que** au moins certains desdits sabots de montants (28) sont connectés entre eux au moyen de ponts de raccordement (29) et certains desdits sabots de montants (28) sont séparés l'un de l'autre au moyen de fentes de séparation (29').

11. Structure de moteur électrique (100) selon la revendication 1, **caractérisée en ce que** le nombre desdits secteurs renfoncés (121) est égal au nombre de montants (26) de la pièce de montant (23).

12. Structure de moteur électrique (100) selon la revendication 1, **caractérisée en ce que** chaque secteur renfoncé (121) est défini par un arc sous-tendu par un angle par rapport au centre (θ) d'environ 30°.

13. Structure de moteur électrique (100) selon la revendication 1, **caractérisée en ce que** les extrémités extérieures desdits montants (26) de la pièce de montant (23) font saillie vers l'extérieur desdits supports avant et arrière (40, 50) pour pouvoir se mettre en prise dans lesdites gorges (27) du bord intérieur du bâti de stator (22).

14. Structure de moteur électrique (100) selon l'une quelconque des revendications précédentes, **caractérisée en ce qu'**une partie avant dudit arbre d'entraînement (31) est supportée de manière rotative par un palier ou un coussinet (15) disposé dans ladite demi coque avant (12).

15. Structure de moteur électrique (100) selon l'une quelconque des revendications précédentes, **caractérisée en ce que** l'extrémité avant (32) dudit arbre d'entraînement (31) fait saillie vers l'avant à partir de ladite demi coque avant (12) pour se mettre en prise dans une bride (17) capable de supporter une charge, comme un ventilateur.

16. Structure de moteur électrique (100) selon l'une quelconque des revendications précédentes, **caractérisée en ce que** ledit rotor (30) est un rotor à aimants permanents.

17. Structure de moteur électrique (100) selon la revendication 16, **caractérisée en ce que** lesdits composants électroniques de commande (80) comprennent un capteur électromagnétique à effet de Hall capable de détecter le champ magnétique généré par les aimants permanents du rotor (30).
